# EUROPÄISCHE PATENTANMELDUNG

(11) **EP 0 822 132 A2**
(43) Veröffentlichungstag der Anmeldung: **04.02.1998**
(21) Anmeldenummer: 97111800.5
(22) Anmeldetag: 11.07.1997
(51) Int. Cl.: B62D 25/08

(54) **Frontendteil für eine Kraftfahrzeugkarosserie**

(30) Priorität: 01.08.1996 DE 19630899
(71) Anmelder: Daimler-Benz Aktiengesellschaft, 70546 Stuttgart (DE)
(72) Erfinder: Attinger, Thomas, 70597 Stuttgart (DE); Kleineberg, Wolfgang, 75365 Calw (DE); Oses, Ingo, 73116 Wäschenbeuren (DE)

(57) **Zusammenfassung**

Vormontierte Frontendteile, bei denen der Motorkühler, der Stoßfänger und eine Frontabdeckung zu einer Baueinheit zusammengefaßt sind, können ungerichtete Strömungen der eintretenden Luft im Motorraum und um den Kühler herum nicht verhindern.

Es wird vorgeschlagen, die vormontierte Baueinheit mit einer motorseitigen Endwand zu versehen, die nach dem Anbau als eine Trennwand zwischen Motorraum und dem Frontbereich dient. Diese Endwand wird mit Öffnungen zum abgedichteten Einbau des Motorkühlers oder anderer Teile versehen, so daß eine strikte Trennung in einen warmen Bereich innerhalb des Motorraums und in einen vor der Trennwand liegenden kalten Frontbereich vorgenommen werden kann.

Verwendung für vormontierbare Frontendteile von Personenkraftwagen.

## Beschreibung

Die Erfindung betrifft ein Frontendteil für eine Kraftfahrzeugkarosserie, insbesondere für einen Personenkraftwagen, bei dem eine Frontabdeckung, ein Stoßfänger und mindestens ein Kühler zu einer vormontierten Baueinheit zusammengefaßt und an zwei Längsträgern des Fahrgestellrahmens befestigt sind.

Ein Frontendteil dieser Art ist aus der DE 43 07 793 A1 bekannt. Dort hat man in Kunststoffbauweise ein Kühlermodul mit zwei seitlichen Struktureinheiten in Rahmenform versehen, wobei das Kühlermodul ein kastenartiges Gehäuse aufweist, das den mittleren Teil des Frontbereiches bildet. Dabei entspricht die Breite dieses Gehäuses dem Abstand zweier Längsträger des Fahrgestellrahmens, so daß das Gehäuse im montierten Zustand exakt zwischen die beiden Längsträger eingepaßt ist. Dieses Gehäuse dient zur Aufnahme eines Kühlers, eines Lüfterrades sowie zusätzlicher Funktionsaggregate für den Betrieb des Kühlers. Vor diesem Gehäuse ist ebenfalls ein aus Kunststoff bestehender Querträger mit etwa U-förmigem Profil vorgesehen, dem auch noch energieabsorbierende Pralldämpfer vorgeschaltet sein können. Die seitlichen Strukturteile in Rahmenform dienen zur Aufnahme je einer Leuchte.

Bei solchen Bauarten kann es dazu kommen, daß die am Frontende einströmende Luft durch das den Kühler und Zusatzbauteile aufnehmende und im wesentlichen in der Fahrzeugmitte angeordnete Gehäuse nach außen abgelenkt werden und im Inneren der Karosserieverkleidung zu ungewollten Rückströmungserscheinungen führen, durch die Luft vom Gebläse des Kühlers aus dem Motorraum angesaugt und unter Umständen auch durch den Kühler geführt wird, die aber durch ihren Aufenthalt in der warmen Zone im Motorraum schon aufgewärmt und daher nicht mehr für die volle Kühlleistung zur Verfügung steht. Nachteilig ist auch, daß ein Teil der anströmenden Luft ungenutzt seitlich am Kühler bzw. dessen Gehäuse vorbeistreicht. Dies kann zur Beeinflussung des c_{w}-Wertes führen und auch nachteilige Erscheinungen für eine Klimatisierung hervorrufen.

Es ist zwar auch schon bekannt (DE 39 17 108 C1), die Luftführung für die Kühlluft im Bug eines Kraftfahrzeuges so auszubilden, daß sie nicht mit dem Motorraum in Berührung kommt. Dies wird erreicht durch eine den Motorraum umschließende Kapsel, der im Bug des Fahrzeugs ein Luftkanal vorgelagert ist, in den die Luft in einer senkrecht gelegenen Öffnung eintritt und in einer im wesentlichen waagrecht an der Unterseite gelegenen Austrittsöffnung wieder austritt. Bei solchen Bauarten hat man, um die durch den Kühler strömende und am Eintritt in den Motorraum gehinderte Luft voll auzunützen, in den Luftführungskanal Umlenkbleche mit Wärmetauschflächen eingefügt, die zur Ergänzung der Kühlung dienen sollen. Solche Bauarten sind aber, schon wegen des vor dem Motor liegenden Bauraumes für den Luftführungskanal aufwendig und sind kaum in die Praxis umgesetzt worden.

Aus der DE 4 425 852 C2 ist es bekannt, ein Frontkarosserieteil dadurch herzustellen und vorzumontieren, daß zwei Lampenträgerpaneele jeweils mit den Kotflügelschürzen über ein Verlängerungselement so zusammengeschweißt werden, daß das Vorderteil der Kotflügelschürze nach vorne aus dem zugeordneten Lampenträgerpaneel heraussteht. Diese Ausgestaltung wird vorgenommen, um die Stabilität der Verbindungsstellen zwischen Lampenträgerpaneel und Kotflügelschürze beim Abschleppen zu erhöhen. Das Frontkarosseriebauteil, bei dem die beiden Lampenträgerpaneele über Querelemente zusammengefügt sind, nimmt aber kein Kühlermodul auf und kann auch die geschilderten Nachteile der Kühlluftführung nicht verhindern. Das gilt auch für bekannte Frontendteile (GB 1041 130 B), die auf die Enden der Längsträger aufgesetzt und durch Verstrebungen gehalten werden. Diese Frontendteile, die nicht mit dem Stoßfänger verbunden sind, können zwar Kühler und Lampen aufnehmen; da sie aber bauartbedingt - ähnlich wie die eingangs erwähnten Frontendteile - keine Abdichtung des Motorraumes gegen einen seitlichen oder von unten erfolgenden Lufteintritt bewirken, kann eine unkontrollierte Luftführung nicht vermieden werden.

Der vorliegenden Erfindung liegt die Aufgabe zugrunde, ein Frontendteil der eingangs genannten Art so auszubilden, daß eine unkontrollierte Durchströmung des Kühlerbereiches vermieden wird, die Vorteile einer vormontierbaren Baueinheit aber beibehalten werden.

Die Erfindung besteht bei einem Frontendteil der eingangs genannten Art darin, daß die Baueinheit motorseitig durch eine Endwand abgeschlossen ist, die als eine Trennwand quer durch den Fahrzeugvorbau verläuft und mit ihren Rändern abgedichtet an der Innenwand des Fahrzeugvorbaues anliegt, sowie mit Öffnungen für den abgedichteten Einbau des Kühlers und mit Öffnungen für weitere Einbauten oder zur gezielten Luftdurchführung versehen ist.

Durch diese Ausgestaltung wird die gesamte zuströmende Luft gezielt zur Kühlung ausgenützt. Der vor dem Kühler liegende Frontbereich wird gegenüber dem Motorraum gleichzeitig abgekapselt, so daß hinter dem Kühler eine warme und vor dem Kühler eine kalte Zone gebildet wird, ohne daß aufwendige Vorkehrungen zu diesem Zweck zu treffen sind. Beim Einbau der vormontierten Frontend-Baueinheit wird gleichzeitig die Abkapselung des Vorbaues gegenüber dem Motorraum vorgenommen. Durch diese Maßnahmen kann auch die Motorkühlung und die Klimatisierung vorteilhaft beeinflußt werden, weil das ganze Luftangebot genutzt wird. Leckluftströme um den Kühler herum und ein dadurch bedingter negativer Einfluß auf den c_{w}-Wert werden ausgeschlossen. Durch die Anordnung einer über die gesamte Breite und Höhe des Fahrzeugvorbaues durchgehenden Trennwand kann auch die Auftreffläche des Frontendes des Fahrzeuges in der Breite, vor allen Dingen aber in der Höhe, vergrößert werden, so daß im Crash-Fall auch die Größe der verformbaren Fläche und damit auch die Fähigkeit zur Aufnahme von Verformungsenergie größer wird.

In Weiterbildung der Erfindung kann die Endwand mit zum Motorraum hin gerichteten Auswölbungen zur Bildung von Aufnahmevertiefungen für die Scheinwerfer versehen sein, so daß Stoßdämpfer, Frontabdeckung, Kühler und gegebenenfalls auch die Scheinwerfer schon in einer vormontierten Baueinheit vorgesehen sind, die als Abschluß des Frontvorbaus dient.

In Weiterbildung der Erfindung kann in der Trennwand eine Einbauöffnung für einen Ölkühler oder für zusätzliche Kühler wie beispielsweise Ladeluftkühler vorhanden sein. Es ist auch möglich, eine Öffnung für die Durchführung von Ansaugluft für den Motor vorzusehen, so daß hier die Möglichkeit der Zuführung nicht vorgewärmter Luft für die Ansaugung besteht. Schließlich kann die Trennwand auch mit Durchlaßöffnungen für die Längsträger versehen sein, die vor der Trennwand mit dem Stoßfänger und mit der Frontabdeckung verbunden werden.

Die Erfindung ist anhand von Ausführungsbeispielen in der Zeichnung dargestellt und wird im folgenden erläutert. Es zeigen:
- Fig. 1: eine schematische perspektivische Darstellung des Vorbaues eines Fahrzeuges mit einem erfindungsgemäß ausgebildeten Frontendteil, das als Ganzes als Abschluß in den Vorbau einsetzbar ist,
- Fig. 2: eine schematische Darstellung des Vorbaues eines Kraftfahrzeuges mit einem angebauten Frontendteil in einer Seitenansicht und
- Fig. 3: die perspektivische Darstellung der Endwand des Frontendteiles der Fig. 2 in einer Ansicht in Richtung der Schnittlinie III-III.

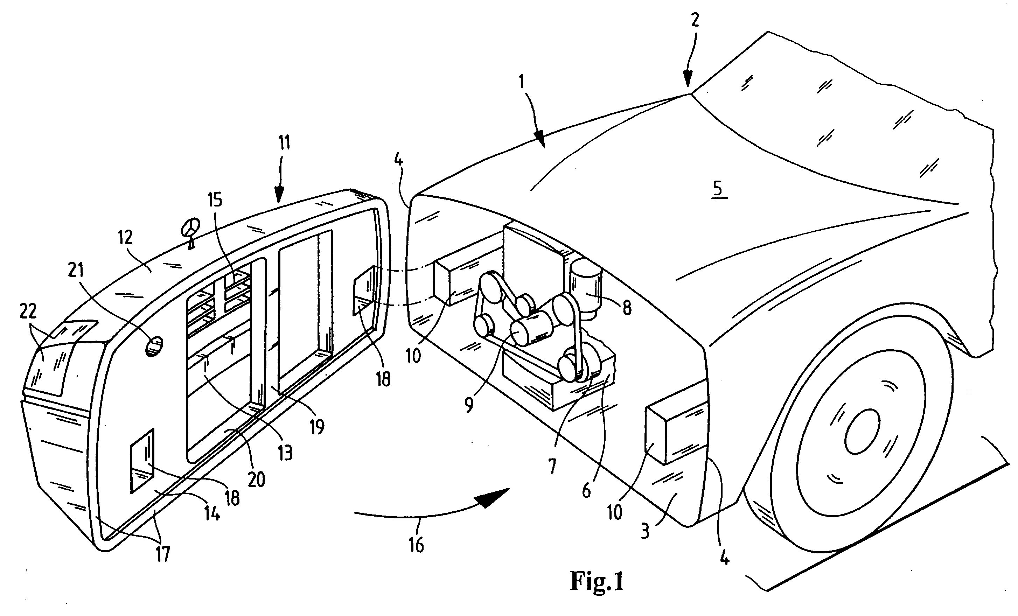

In der Fig. 1 ist der Vorbau (1) eines Personenkraftwagens (2) zu sehen, der aus dem den Motorraum ummantelnden Karosserieteilen eines Bodens (3), zwei Seitenwänden (4) und einer Haube (5) besteht, deren Öffnungsmöglichkeit nicht im einzelnen angedeutet ist. Innerhalb des Motorraumes ist der Motorblock (6) schematisch angedeutet, mit den an seiner Frontseite verlaufenden, in bekannter Weise von der Motorwelle aus angetriebenen Aggregaten, wie der Lichtmaschine (7) oder der Ölpumpe (8) und einer Kupplung (9) zum Anschluß eines nicht gezeigten Lüfterrades, das hinter dem Motorkühler sitzt. Im Motorraum verlaufen außerdem die vorderen Enden der Längsträger (10).

Der gesamte Vorbau (1) ist in der Darstellung des Fahrzeuges (2) auf der dem Betrachter zugewandten Seite offen. Dieser Vorbau (1) wird durch ein Frontendteil (11) verschlossen, das aus der Frontabdeckung (12) mit dem Kühlergrill (15), einem vorderen, als Stoßfänger dienenden Querträger (13) und aus einer Endwand (14) besteht, die das Frontendteil (11) nach hinten zum Motorraum hin abschließt. Diese Endwand (14) wird im Sinne des Pfeiles (16) in den Vorbau (1) eingesetzt und an ihrem gesamten Umfang, an dem eine geeignete Dichtung (17) vorgesehen ist, dicht an die Innenflächen des Bodens (3), der Seitenwände (4) und der Haube (5) angelegt und entsprechend abgedichtet befestigt. Dies geschieht beim Ausführungsbeispiel dadurch, daß die Längsträger (10) durch Öffnungen (18) in der Endwand (14) geführt und mit dem Querträger (13) verbunden werden, so daß das gesamte Frontendteil (11) vorne auf den Vorbau (1) aufgesetzt ist. Die Endwand (14) dient dann als eine Trennwand zwischen dem Motorraum und dem ihr vorgelagerten Frontbereich mit dem Kühlergrill und dem Querträger (13).

In die Endwand (14) ist abgedichtet eine schematisch angedeutete Kühlerzarge (19) eingesetzt, an die der Fahrzeugkühler und das nicht gezeigte Lüfterrad angeschlossen werden kann. Die Kühlerzarge (19) deckt beim Ausführungsbeispiel nur einen Teil einer Öffnung (20) in der Endwand (14) ab und der verbleibende Bereich kann beispielsweise mit einem weiteren Kühler, z.B. einem Ölkühler oder dem Kühlaggregat für ein Klimagerät abgedeckt werden. Die Endwand ist außerdem mit einer Öffnung (21) für den Anschluß einer Verbindungsleitung zur Luftansaugung für den Motor versehen. Diese Ausgestaltung bewirkt daher, daß die gesamte während der Fahrt zur Verfügung stehende Anströmluft zur Durchströmung des Motorkühlers oder der anderen Kühlaggregate verwendet wird. Unkontrollierte Durchströmungen im Motorraum treten nicht auf.

Der Vorbau wird durch die als Trennwand wirkende Endwand (14) in eine warme Zone innerhalb des Motorraums und in eine vor der Trennwand (14) liegende kalte Zone aufgeteilt, so daß es auch möglich wird, gezielt Saugluft aus dem kalten Bereich zu holen. Unerwünschte Rückströmungen vom Motorraum zum Kühlereintritt werden sicher verhindert. Darüber hinaus liegt eine komplett vormontierbare Baueinheit vor, die lediglich als vorderer Abschluß auf die Karosserie aufgesetzt zu werden braucht.

Die Fig. 1 läßt auch erkennen, daß vor der Endwand (14) im Bereich der Abdeckung (12) die Scheinwerfer (22) mit eingebaut sind. Hier braucht lediglich noch ein elektrischer Steckanschluß vorgesehen zu werden, so daß die weiteren Montagearbeiten nach dem Aufsetzen und Befestigen des Frontendteiles (11) sich auf den Anschluß der Kupplung für das Lüfterrad, auf Elektroanschlüsse und gegebenenfalls noch auf die Anschlüsse für eine Scheinwerfer-/Wisch/Wasch-Anlage beschränken können.

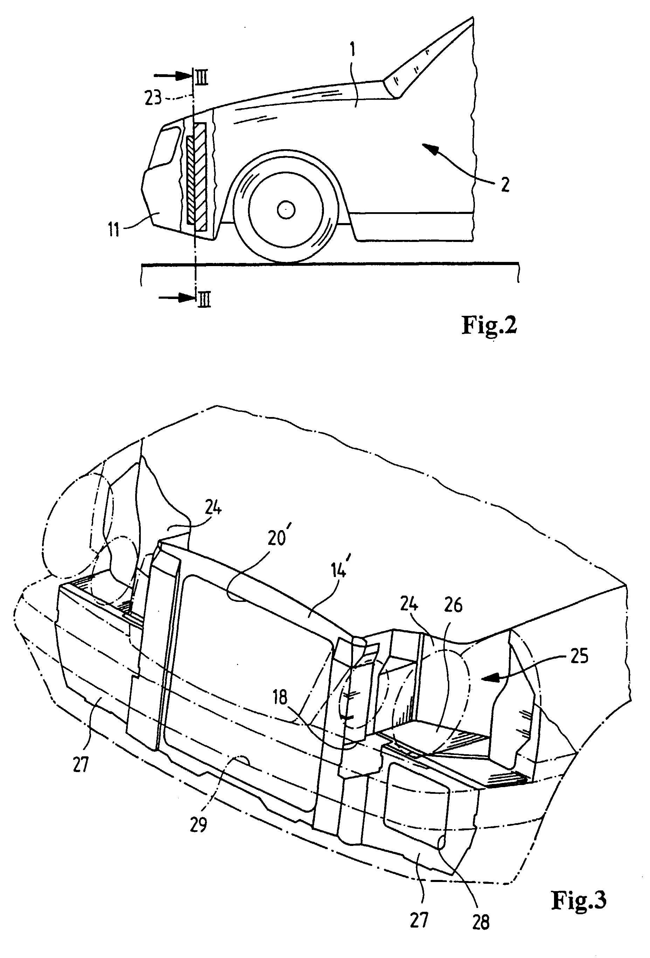

Die Fig. 2 zeigt, daß das Frontendteil (11) in einer Trennebene (23) angesetzt ist, die im wesentlichen mit der Schnittebene III-III zusammenfällt.

Die Fig. 3 zeigt, daß die Endwand (14') nicht, wie in Fig. 1 schematisch gezeigt, nur als eine ebene, mit Öffnungen versehene Wand ausgebildet sein muß, sondern daß sie ihre Wirkung als Trennwand auch ausüben kann, wenn sie von der zentralen Öffnung (20') für den Motorkühlereinbau aus mit zum Motorraum hin gerichteten Auswölbungen und Abkantungen versehen ist, durch die Vertiefungen zum Einbau der strichpunktiert angedeuteten Scheinwerfer - hier in der Form von Doppelscheinwerfern - gebildet sind. Diese Vertiefungen (25) werden dabei nach unten von einem etwa horizontal verlaufenden Boden (26) begrenzt, der vorne in die gegenüber dem mittleren Teil etwas zurückgesetzten senkrechten Abschlußwände (27) übergeht, von denen die rechts gelegene Wandfläche (27) mit einer fensterartigen Ausnehmung (28) zum Einbau eines Ölkühlers versehen ist. Möglich wäre es auch noch, die hinten liegenden Wände (24) mit Ausnehmungen zum abgedichteten Einbau der Fahrzeugscheinwerfer zu versehen, so daß diese in der Endwand (14') abgedichtet gehalten sind und in den Raum (25) bis zur vorderen, nicht näher gezeigten Frontabdeckung hereinragen. Die Frontabdeckung geht unten in die strichpunktiert angedeutete Kontur (29) des Stoßfängers über, der hinter der Frontabdeckung sitzt und, wie vorher geschildert wurde, über den Querträger (13) mit den Längsträgern (10) verbunden wird.

Wie aus den Figuren auch erkennbar wird, wird im Crashfall nach einer gewissen Verformung des Stoßfängers die gesamte Endwand (14, 14') zum Auffangteil. Da ihre verformbare Fläche gegenüber der Fläche des Stoßfängers alleine sowohl nach der Seite gesehen, als insbesondere in der Höhe gesehen wesentlich größer ist, ist auch die Möglichkeit zur Energieabsorption größer als ohne die Verwendung eines Frontendteiles mit einer Endwand (14, 14').

## Patentansprüche

1. Frontendteil für eine Kraftfahrzeugkarosserie, insbesondere für einen Personenkraftwagen, bei dem eine Frontabdeckung (12), ein Stoßfänger (13, 29) und mindestens ein Kühler (19) zu einer vormontierten Baueinheit zusammengefaßt und an zwei Längsträgern (10) des Fahrgestellrahmens befestigt sind,
**dadurch gekennzeichnet, daß**
die Baueinheit motorseitig durch eine Endwand (14, 14') abgeschlossen ist, die als eine Trennwand quer durch den Fahrzeugvorbau (1) verläuft und mit ihren Rändern (17) abgedichtet an der Innenwand des Fahrzeugvorbaues (1) anliegt, sowie mit Öffnungen (20, 20') für den abgedichteten Einbau des Motorkühlers und mit Öffnungen (28, 21) für weitere Einbauten, oder zur gezielten Luftdurchführung versehen ist.

2. Frontendteil nach Anspruch 1,
**dadurch gekennzeichnet, daß**
die Endwand (14') mit zum Motorraum hin gerichteten Auswölbungen (24) zur Bildung von Aufnahmevertiefungen (25) für die Scheinwerfer versehen ist.

3. Frontendteil nach Anspruch 1 und 2,
**dadurch gekennzeichnet, daß**
die Endwand (14') mit einer Einbauöffnung (28) für einen Ölkühler versehen ist.

4. Frontendteil nach Anspruch 1 oder 2,
**dadurch gekennzeichnet, daß**
die Endwand (14) mit einer Öffnung (21) für die Ansaugluft des Motors versehen ist.

5. Frontendteil nach einem der Ansprüche 1 bis 4,
**dadurch gekennzeichnet, daß**
die Endwand (14, 14') mit Durchlaßöffnungen (18) für die Längsträger (10) versehen ist, die vor der Endwand (14, 14') mit dem Stoßfänger (13, 29) verbunden sind.
